# EUROPÄISCHE PATENTANMELDUNG

(11) **EP 0 870 631 A2**
(43) Veröffentlichungstag der Anmeldung: **14.10.1998**
(21) Anmeldenummer: 98104378.9
(22) Anmeldetag: 11.03.1998
(51) Int. Cl.: B60C 19/00

(54) **Kraftfahrzeugrad**

(30) Priorität: 10.04.1997 DE 19715071
(71) Anmelder: Dr.Ing.h.c. F. Porsche Aktiengesellschaft, 70435 Stuttgart (DE)
(72) Erfinder: Özkan, Ali, 72119 Ammerbuch (DE); Ochs, Jürgen, 71297 Mönsheim (DE)

(57) **Zusammenfassung**

Ein Kraftfahrzeugrad weist in einem auf einer Felge gehaltenen Reifen eine Laufflächen-Schwingungen dämpfende Schaumstoffschicht auf, die je nach Anforderung ausgeführt ist.

## Beschreibung

Die Erfindung bezieht sich auf ein Kraftfahrzeugrad nach dem Oberbegriff des Anspruchs 1.

Das System Rad/Reifen ist neben anderen Geräuschquellen, wie beispielsweise dem Antriebsstrang, zu einem erheblichen Teil an der Zusammensetzung des Innengeräusches beteiligt, wobei die Bedeutung der vom Reifen übertragenen Geräusche mit steigender Rauhigkeit und Unebenheit der Fahrbahn zunimmt. Verschärfend kommt hinzu, daß die Geräuschreduzierung am Antriebsstrang durch bekannte Primär- und Sekundärmaßnahmen relativ gut beherrschbar ist, aber die niederfrequente Innengeräuschanregung über das System Rad/Reifen jedoch nur bedingt; dies gilt insbesondere für Hochleistungsfahrzeuge, die mit Niederquerschnittsreifen ausgerüstet sind.

Es ist aus der DE 195 48 728 C1 bekannt, daß beim Abrollen des Reifens, beispielsweise auf unebener Fahrbahn, Resonanzschwingungen an der Reifenlauffläche angeregt werden. Diese Reifenresonanz wird sowohl als Luftschall direkt als auch über die Fahrwerksaufhängung indirekt als Körperschall abgestrahlt. Im Innengeräuschspektrum lassen sich typischerweise die geschwindigkeitsabhängigen Resonanzfrequenzen leicht wiederfinden.

Des weiteren ist aus der DE 30 42 350 C2 ein Fahrzeugluftreifen bekannt, dessen Innenfläche ganz oder teilweise mit einem geräuschmindernden Belag aus offenzelligem Schaumstoff versehen ist, um die Rollgeräusche und damit den gesamten Geräuschpegel vom fahrenden Kraftfahrzeug zu senken.

Aufgabe der Erfindung ist es, ein Kraftfahrzeugrad zu schaffen, mit dem die vom System Rad/Reifen ausgelösten Innengeräuschüberhöhungen bei schnellaufenden Pkw-Reifen zu bedämpfen sind.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß der Reifeninneraum bzw. der Bereich des Laufstreifens mit einer schwingungsdämpfenden Schicht versehen wird. Hierdurch sollen insbesondere die vom System Rad/Reifen ausgelösten Innengeräuschüberhöhungen im Frequenzbereich von ca. 100 bis 300 HZ gedämpft werden.

Dies erfolgt insbesondere durch eine kombinierte Behandlung des Reifentorusraumes mit einer Füllung, die sowohl die Laufflächenschwingungen bedämpft als auch die Luftsäulenschwingungen innerhalb des Torusraumes absorbiert. Dies wird in der vorliegenden Erfindung, beispielsweise durch Aufkleben einer porösen, flexiblen Absorptionsschicht von innen auf die Inliner-Schicht des Reifens im Bereich des Laufstreifens realisiert. Da diese kombinierte Absorptions-Dämpfungsbefüllung nicht über den Reifenwulst nach innen zum Felgenbett hinausragt, steht einer problemlosen Reifenmontage auf die Felgen nichts entgegen.

In einer bevorzugten Ausführungsform handelt es sich bei der porösen Absorptionsschicht um einen offenzelligen Polyätherschaum bzw. einen viskoelastischen PUR-Schaum. Es ist auch eine nur teilweise Füllung des Torusraumes mit dem porösen, flexiblen Schaumstoff vorgesehen. Des weiteren kann ein selbstklebender viskoelastischer Adhäsivschaum eingesetzt werden, der mit einem Lösungsmittelkleber an der Reifeninnenwand gehalten wird.

Die Schaumstoffüllung kann den Torusraum des Reifens vollständig ausfüllen oder aber auch nur teilweise. Auch ist eine Verklebung nicht in jedem Fall erforderlich.

Der Torusraum des Reifens kann auch mit mehreren Schichten von Schaumstoff gefüllt sein, wobei die Schichten ein gleiches und/oder unterschiedliches Raumgewicht aufweisen können.

Ausführungsbeispiele der Erfindung sind in den Zeichnungen dargestellt und werden im folgenden näher beschrieben. Es zeigen:
- Fig. 1: einen Querschnitt durch ein Rad mit einer Füllung aus Schaumstoff,
- Fig. 2: einen Querschnitt durch ein Rad mit einer teilweisen Füllung aus Schaumstoff unter Freilassung eines Teiles des Torusraumes,
- Fig. 3: einen Querschnitt durch ein Rad mit einer Füllung aus Schaumstoff in drei Schichten,
- Fig. 4: einen Querschnitt durch ein Rad mit einer Füllung aus Schaumstoff in zwei Schichten unter Freilassung eines Raumes innerhalb des Reifens,
- Fig. 5: einen Querschnitt durch ein Rad mit einer geklebten Dämpfungsfolie im Bereich einer Laufflächeninnenseite,
- Fig. 6: einen Querschnitt durch ein Rad mit einer Dämpfungsfolie an der Laufflächeninnenseite sowie einer teilweisen Schaumstoffüllung,
- Fig. 7: einen Querschnitt durch ein Rad mit einer Dämpfungsfolie an der Laufflächeninnenseite und zwei Schaumstoffschichten und
- Fig. 8: einen Querschnitt durch ein Rad mit drei den Torusraum vollständig ausfüllenden Schaumstoffschichten auf einer Dämpfungsfolie.

Ein Fahrzeug 1 ist zur Absorbierung von Laufflächenschwingungen und/oder Luftsäulenschwingungen innerhalb des Torusraumes 2 eines Reifens 3 mit einer Füllung aus Schaumstoff 4 oder dgl. Stoff versehen, der ganz oder teilweise den Torusraum 2 des Reifens 3 ausfüllt.

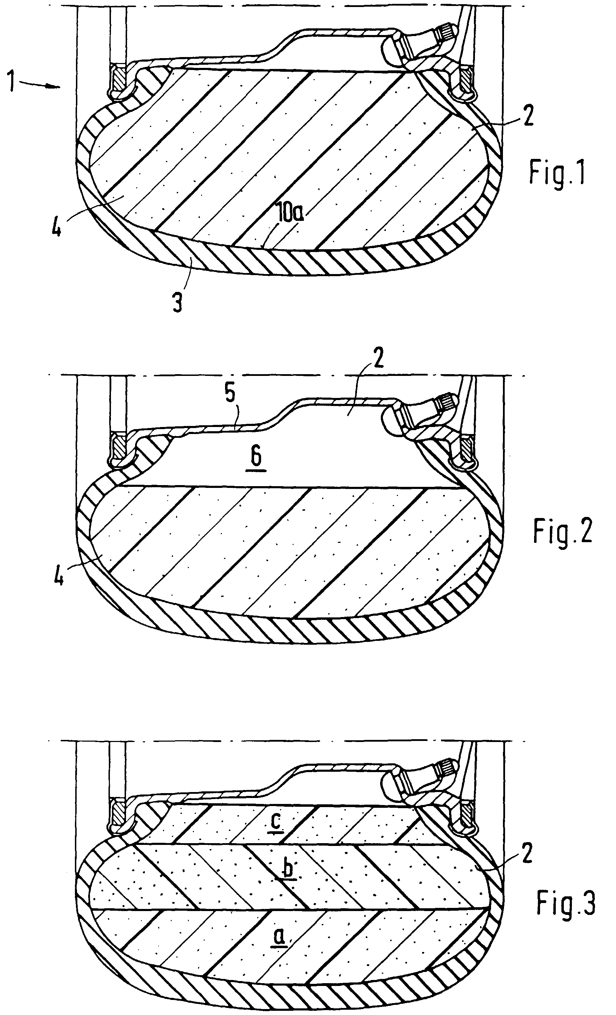

Wie die Fig. 1 und 2 näher zeigen, ist der Torusraum 2 des Reifens bei Fig. 1 vollkommen mit Schaumstoff 4 ausgefüllt, wogegen nach Fig. 2 der Torusraum 2 nur teilweise mit Schaumstoff 4 versehen ist. Bei dieser Ausführung bleibt der Raum der Felge 5 sowie ein Teilraum des Torus frei von Schaumstoff und es bildet sich insgesamt ein Freiraum 6.

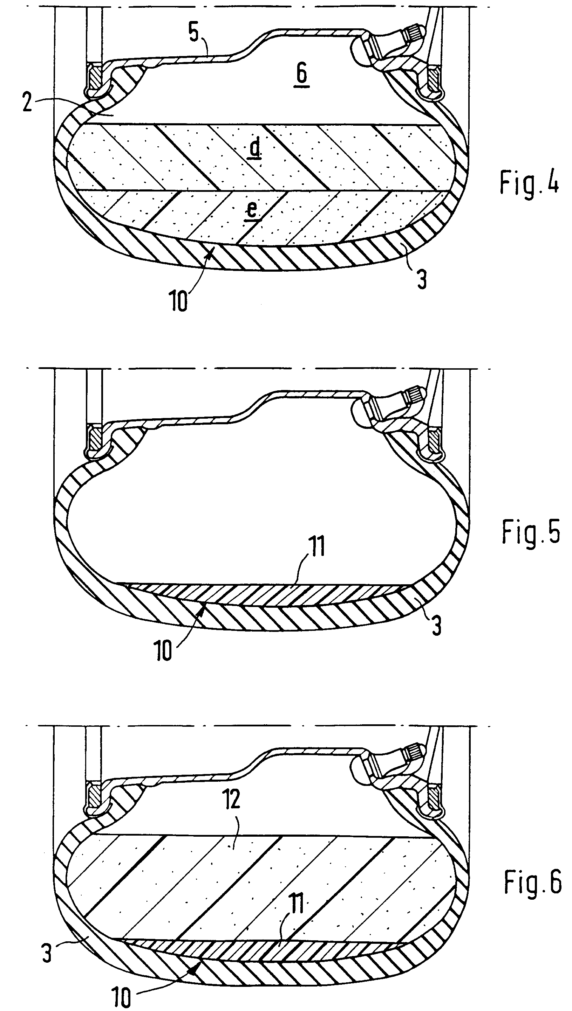

In den Fig. 3 und 4 sind Füllungen aus Schaumstoff im Torusraum 2 dargestellt, die aus mehreren Schichten bestehen, wobei in der Ausführung gemäß Fig. 3 drei Schichten a, b und c und in der Ausführung gemäß Fig. 4 nur zwei Schichten d und e im Torusraum 2 vorgesehen sind.

Die Schaumstoffschichten a, b, c und d, e sind von gleicher und/oder unterschiedlichem Raumgewicht und als Ringe im Reifeninnenraum angeordnet. Bei der Ausführung nach Fig. 4 verbleibt ein Freiraum 6 zur Felge 5.

Die Schaumstoffüllung kann im Randbereich des Reifens geklebt oder auch ungeklebt angeordnet sein, was auch von der Verwendung der Art des Schaumstoffes abhängig ist.

In bevorzugter Ausführungsform handelt es sich bei dem Schaumstoff um einen offenzelligen Polyätherschaum oder einen viskoelastischen PUR-Schaum. Es kann bei Verzicht auf eine Klebung auch ein selbstklebender viskoelastischer Adhäsivschaum eingesetzt werden.

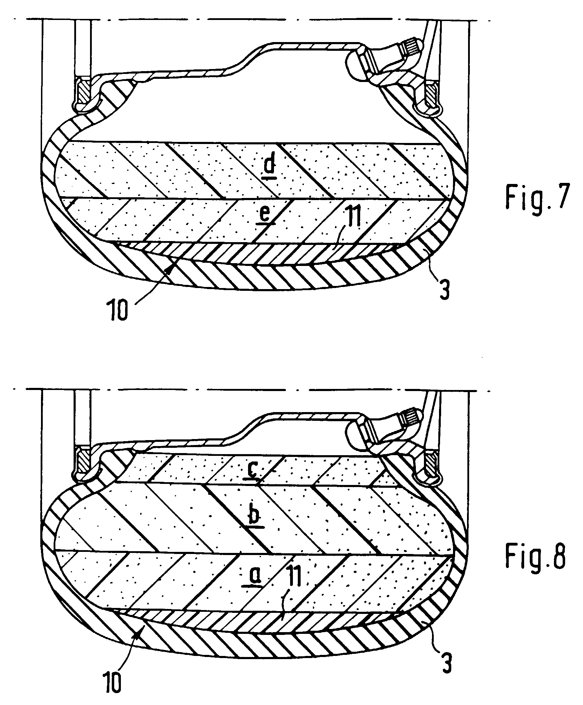

In den Ausführungen nach den Fig. 5 bis 8 ist im Bereich des Laufstreifens 10 im Inneren des Reifens 3 eine selbstklebende Kunststoff-Dämpfungsfolie 11 vorgesehen. Diese Folie 11 weist eine definierte Dicke auf und ist gemäß Fig. 5 allein den Reifengrund ausfüllend angeordnet.

Die weiteren Ausführungen gemäß der Fig. 6 bis 8 weisen auf der Folie 11 eine Füllung aus Schaumstoff auf, wobei die Ausführung nach Fig. 6 eine nur teilweise Füllung mit Schaumstoff 12 des Torusraumes 2 und die weiteren Ausführungen 7 und 8 eine Füllung mit Schaumstoffschichten a, b und c bzw. d und e beinhalten. Die Schaumstoffschichten können mit der Reifenwandung verklebt sein.

## Patentansprüche

1. Kraftfahrzeugrad mit einem auf einer Felge aufgebrachten Reifen, der innenseitig mit einem Schaumstoff versehen ist, dadurch gekennzeichnet, daß zumindest im Bereich des Laufstreifens (10) des Reifens (3) eine Laufflächenschwingungen dämpfende Schaumstoffschicht auf einer Inliner-Schicht (10 a) des Reifens (3) angeordnet ist.

2. Kraftfahrzeugrad nach Anspruch 1, dadurch gekennzeichnet, daß als dämpfende Schaumstoffschicht eine flexible Absorptionsschicht aus einem offenzelligen Polyätherschaum verwendet wird.

3. Kraftfahrzeugrad nach Anspruch 1, dadurch gekennzeichnet, daß als dämpfende Schaumstoffschicht ein viskoelastischer PUR-Schaum verwendet wird.

4. Kraftfahrzeugrad nach Anspruch 1, dadurch gekennzeichnet, daß als dämpfende Schaumstoffschicht ein selbstklebender, viskoelastischer Adhäsivschaum verwendet wird.

5. Kraftfahrzeugrad mit einem auf einer Felge aufgebrachten Reifen, der innenseitig mit einem Schaumstoff versehen ist, dadurch gekennzeichnet, daß im Bereich des Reifen-Laufstreifens (10a) innenseitig eine Kunststoff-Dämpfungsfolie (11) aufgebracht ist.

6. Kraftfahrzeugrad nach Anspruch 1 oder 5, dadurch gekennzeichnet, daß auf der Dämpfungsfolie (11) mindestens eine Schicht aus Schaumstoff vorgesehen und mit dieser verbunden ist.

7. Kraftfahrzeugrad nach einem oder mehreren der vorhergehenden Ansprüche, dadurch gekennzeichnet, daß der Schaumstoff in mehreren Schichten (a, b, c) innerhalb des Reifeninnenraumes (2) angeordnet ist, wobei jede Schicht aus einem Schaumstoffmaterial gleichen und/oder unterschiedlichen Raumgewicht besteht.

8. Kraftfahrzeugrad nach einem oder mehreren der vorhergehenden Ansprüche, dadurch gekennzeichnet, daß der Reifeninnenraum (2) mit einem Schaumstoff ausgefüllt ist und eine Verbindung mit der Innenfläche des Reifens (3) sowie der Felge (5) aufweist.

9. Kraftfahrzeugrad nach einem oder mehreren der vorhergehenden Ansprüche, dadurch gekennzeichnet, daß der Schaumstoff mit der Inliner-Schicht (10a) verklebt ist.

10. Kraftfahrzeugrad nach einem oder mehreren der vorhergehenden Ansprüche, dadurch gekennzeichnet, daß der Schaumstoff mit der Inliner-Schicht (10a) keine Verklebung aufweist.

11. Kraftfahrzeugrad mit einem auf einer Felge aufgebrachten Reifen, der innenseitig mit einem Schaumstoff versehen ist, dadurch gekennzeichnet, daß die Schaumstoffschicht bzw. -schichten für eine Bedämpfung einer Innengeräuschüberhöhung im Frequenzbereich von 100 bis 300 Hz verwendet wird.
